(19) Europäisches Patentamt
European Patent Office
Office européen des brevets

(11) Publication number: 0 253 642
A2

(12) # EUROPEAN PATENT APPLICATION

(21) Application number: 87306250.9

(51) Int. Cl.⁴: C 09 J 3/06

(22) Date of filing: 15.07.87

(30) Priority: 15.07.86 US 885934

(43) Date of publication of application: 20.01.88 Bulletin 88/3

(84) Designated Contracting States: AT BE CH DE ES FR GB GR IT LI LU NL SE

(71) Applicant: H.B. FULLER COMPANY, 2400 Energy Park Drive, St. Paul Minnesota 55108 (US)

(72) Inventor: Hume III,Robert Marshall, 7171 Ivy Stone Avenue S., Cottage Grove, MN 55016 (US)
Inventor: Krankkala, Paul Leonard, 7821 Rimbley Road, Woodbury, MN 55125 (US)

(74) Representative: Silverman, Warren et al, HASELTINE LAKE & CO. Hazlitt House 28 Southampton Buildings Chancery Lane, London WC2A 1AT (GB)

(54) **Fast setting corrugating adhesive.**

(57) The presence of both soluble and insoluble polyvinyl alcohol in a corrugating adhesive containing starch, a boric acid compound, and sodium hydroxide results in substantially increased bond strength and water resistance. The soluble and insoluble fractions of the polyvinyl alcohol composition cooperate during heating of a glue line in a corrugated board product to first rapidly form a strong green bond at the gel temperature of the starch, and then to form a still stronger cured glue line. The corrugating adhesives of the invention can be used without fear of useless gel formation or delamination of the corrugated board in high speed production.

EP 0 253 642 A2

# FAST SETTING CORRUGATING ADHESIVE

The invention relates to a starch based adhesive composition that can be used to form corrugated board. More particularly, the invention relates to a starch based adhesive composition containing a polyvinyl alcohol composition having soluble and insoluble fractions which cooperate to provide high bond strength and increased productivity of corrugated board.

Corrugated paperboard or liner board is commonly prepared by first forming a corrugated element or medium by passing a cellulosic sheet between corrugating rolls. The corrugating adhesive is commonly applied to the tips or flutes of the corrugated medium and one or more cellulosic liner sheets are applied to the adhesive line. The assembly is then exposed to the action of heat resulting first in the formation of a green bond and after a period of time the formation of a final cured adhesive bond. Corrugating board adhesives, first disclosed in U.S. Pat. No. 2,102,937 have been used for many years and generally comprise gelatinized starch, ungelatinized starch, alkali and borax base. This adhesive has been the basis of the manufacture of a substantial quantity of commercial corrugated paperboard to date. In the corrugated paperboard product as the adhesive is exposed to heat in the glue line the starch particles absorb water, gelatinize, and form a green bond. The alkali and borax components cooperate with starch to form the green bond and after a period of time fully cure into a rigid glue line.

Considerable interest for many years has been focused on improving the rate of formation and strength of green bonds during corrugated board manufacture. The rate of production or productivity of corrugated board is primarily based on the rate of formation and strength of the green bond that forms during initial heating of the corrugated board assembly.

The use of additives in starch based corrugating board and other types of adhesives has been the subject of substantial research in recent years. One useful adhesive additive is various polymers of polyvinyl alcohol. On the whole, the use of soluble polyvinyl alcohol polymers has been avoided since soluble polyvinyl alcohol has been believed to interact with borax in the presence of alkali and starch to form useless gels. In order to avoid these difficulties a variety of patents have taught that by varying such parameters as the pH of the adhesive of the solubility of the polyvinyl alcohol, a stable polyvinyl alcohol containing adhesive can be formed. For example, Nickerson, U.S. Pat. No. 3,720,633 teaches that at acid pH's polyvinyl alcohols can be used in adhesive compositions in the presence of polyhydroxy compounds without the formation of substantial gels. Czerwin, U.S. Pat. No. 4,094,718 and Imoto, Japanese Pat. Publication No. 45-19600 teach that polyvinyl alcohol can be used in corrugating board adhesives containing starch, alkali and borax only if the polyvinyl alcohol compositions are substantially insoluble and prevented from reacting with the adhesive components until the adhesive is applied to the corrugating medium and heated past the gel temperature of the starch. Not only does Nickerson indicate that the use of soluble polyvinyl alcohols can result in the formation of intractable gels but Czerwin treats the insoluble polyvinyl alcohol in order to remove soluble polyvinyl alcohol that could solubilize and interact with the adhesive components and form a gel. However, Czerwin teaches that some soluble polyvinyl alcohol tends to be present in the adhesive. In

our EP-A-0 162 682 certain types of partially hydrolyzed soluble polyvinyl alcohol composition at below a certain concentration were found to be compatible with corrugated board adhesives containing starch, alkali and borax. The addition of the controlled amounts of a specific soluble polyvinyl alcohol was found to substantially increase green bond strength and rate of manufacture of the corrugated board. The amounts of the soluble polyvinyl alcohol that can be used is limited by the fact that at higher concentrations than claimed the soluble polyvinyl alcohols tend to form the gels recognized in Czerwin and Imoto. Further, soluble polyvinyl alcohol tends not to provide any substantial water resistance to the glue line since the polyvinyl alcohol composition can solubilize in the presence of ambient water.

Clearly a substantial need exists in the art to increase the amount of polyvinyl alcohol used in corrugated board manufacture in order to increase both bond strength and water resistance at the glue line.

According to the present invention, there is provided an aqueous, fast setting corrugating adhesive composition, which provides for the rapid formation of a strong green bond and a strong finally cured bond which comprises, in an aqueous emulsion, a major proportion of water, from 5 to 100 parts by weight of starch per each 100 parts by weight of the adhesive, sufficient alkali metal hydroxide to provide an alkaline pH, from 0.1 to 5 parts by weight of a boric acid compound per each 100 parts of water, and from 0.01 to 10 parts by weight of a polyvinyl alcohol composition comprising a soluble fraction and an insoluble fraction, wherein there are from 1 to 100 parts by weight of the insoluble fraction, per each part of soluble fraction.

We have found that an improved corrugating board adhesive can be made by formulating in a high proportion of water a corrugating adhesive composition comprising starch, an alkali metal base, boric acid, and a polyvinyl alcohol composition having two phases at temperatures between ambient and the gel point temperature of a starch slurry 60-65°C (140-150°F), a soluble phase and an insoluble phase. We have found that the soluble and insoluble polyvinyl alcohol compositions preferably employed in a weight ratio of 1:2.5 to 90, more preferably 1:5 to 75, cooperate in the adhesives of this invention to provide substantially increased strength and rate of green bond formation and substantially increased cured bond strengh with increased water resistance. We believe that at the gel point of the starch composition the soluble polyvinyl alcohol cooperates with the starch, borax and alkali to form a high strength green bond which substantially increases the rate of formation of corrugated board and its production

productivity. As the temperature of the glue line increases past about 43°C (110°F), the insoluble portion of the polyvinyl alcohol composition begins to solubilize through the action of heat and contributes substantial cured bond strength and water resistance as a result of its substantial water insolubility. The term "water soluble polyvinyl alcohol" as used in this invention indicate that the polyvinyl alcohol composition is soluble in aqueous solutions at or about ambient 22.5-25°C (73-77°F) conditions. The terms "insoluble polyvinyl alcohol composition" indicates generally fully hydrolyzed or super hydrolyzed polyvinyl alcohol compositions that are insoluble in aqueous solutions until the solutions reach a temperature of 43-49°C (110-120°F) or higher.

The novel water resistant corrugated board adhesives of this invention are prepared by forming an aqueous emulsion having an alkaline pH containing a polyvinyl alcohol composition having a soluble fraction and an insoluble fraction at at temperatures in the glue pan of 43°C (110°F) or less, starch, a strong alkali metal hydroxide base, and a boric acid compound. The compositions can also optionally contain a basically reacting crosslinking resin and a wax compound. The corrugated paperboard adhesive of this invention is preferably produced in the form of a suspension of starch particles in water. The viscosity and solids content are important factors influencing the speed with which the paperboard machine can be operated and also affects the quality of the finished paperboard. The suspending paste or carrier medium must be sufficiently viscous to maintain a smooth suspension of the starch particles and the insoluble polyvinyl alcohol particles, but not so viscous as to interfere with the application of the adhesive to the paperboard corrugating medium. The nature and proportion of the dissolved solids in the aqueous corrugating board

adhesive influences both pot life and the speed with which a given paper stock absorbs water from the applied adhesive. The water content of the adhesive affects the adhesive properties. A small degree of water absorption from the adhesive to the paper is desirable in forming strong bonds between the paper plies. Absorption of water beyond that required to give good bonding is undesirable since it robs the adhesive of water needed to complete the gelatinization of the suspended starch and leads to inferior bonding.

<u>Polyvinyl Alcohol</u>

Polvyinyl alcohol (PVOH) is a polyhydroxy polymer having a polymethylene backbone with pendent hydroxy groups produced by the hydrolysis of polyvinyl acetate. The theoretical monomer:

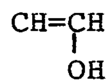

does not exist. Polyvinyl alcohol is one of the very few high molecular weight commercial polymers that is water soluble. It is commonly available as a solid and is available in granular or powdered form. PVOH grades include a "super" hydrolyzed form (99.3% plus removal of the acetate group), a fully hydrolyzed form (99%+ removal of the acetate group), on intermediate hydrolysis form (about 98 to 91% removal of acetate group), and a partly hydrolyzed (not more than 91%, usually 91 to 85% and preferably 91 to 87% removal of the acetate group) polyvinyl alcohol. Partially hydrolyzed polyvinyl alcohols to be used in the practice of this invention preferably have a degree of hydrolysis of not more than 91% while hydrolyzed polyvinyl alcohols to be used in the practice of this invention preferably have a degree of hydrolysis of at least 94%. The properties of the resins vary according to the molecular weight of the parent polymer and the degree of hydrolysis. Polyvinyl alcohols are commonly produced in nominal number average molecular

weights that range from about 20,000 to 100,000. Commonly the molecular weight of commercial polyvinyl alcohol grades is reflected in the viscosity of a 4 wt-% solution measured in centipoise (cP) at 20°C with a Brookfield viscometer. The viscosity of a 4% solution can range from about 5 to about 65 cP. Variation in film

flexibility, water sensitivity, ease of solvation, viscosity, block resistance, adhesive strength, dispersing power can be achieved by adjusting molecular weight or degree of hydrolysis. Solutions of polyvinyl alcohol in water can be made with large quantities of lower alcoholic cosolvents and salt cosolutes. Polyvinyl alcohols can react with aldehydes to form acetals, and be reacted with acrylonitrile to form cyanoethyl groups, and can be reacted with ethylene or propylene oxide to form hydroxy alkylene groups. Polyvinyl alcohols can be readily crosslinked and can be borated to effect gellation.

Polyvinyl alcohol is made by first forming polyvinyl acetate or vinyl acetate containing copolymers such as ethylene vinyl acetate copolymers and removing the acetate groups using a base catalyzed alkanolysis. The production of polyvinyl acetate or a vinyl acetate copolymer can be done by conventional processes which controls the ultimate molecular weight. Catalyst selection temperatures, solvent selection and chain transfer agents can be used by persons skilled in the art to control molecular weight. The degree of hydrolysis is controlled by prdventing the completion of the alkanolysis reaction. Polyvinyl alcohol is made in the United States by Air Products & Chemicals, Inc. under the tradename VINOL®, by duPont under the trade name ELVANOL®, and by Monsanto under the trade name GELVITOL®.

The preferred soluble polyvinyl alcohol compositions for use in this invention comprise polyvinyl alcohol made from a homopolymer or interpolymer of vinyl acetate that is partially hydrolyzed i.e. less than about 91% of the hydroxyl groups are free of acetate. The preferred partially hydrolyzed polyvinyl alcohol is available in low, medium or high molecular weight variations characterized by the Brookfield viscosity of a 4 wt-% aqueous solution at 20 degrees. The low molecular weight polyvinyl alcohol has a viscosity of about 4-10 cP, the medium molecular weight

composition has a viscosity of about 15-30 cP and a high molecular weight composition has a viscosity of about 35-60 cP. The preferred polyvinyl alcohol compositions have a reduced particle size adapting the composition for rapid dissolution. The particle size of the most preferred polyvinyl alcohol is such that 99+ % of the product will pass through a -80 U.S. Standard mesh screen.

The most preferred polyvinyl alcohol composition is made from a low molecular weight homopolymer of vinyl acetate that is partially hydrolyzed resulting in the removal of about 87% to 91% of the acetate groups from the vinyl acetate homopolymer.

The preferred cold water insoluble polyvinyl alcohol composition for use in the two-phase polyvinyl alcohol containing adhesives of this invention comprise polyvinyl alcohol made from a homopolymer or inner polymer of vinyl acetate that is fully hydrolyzed, i.e.. greater than about 98.5 to 99% or greater of the hydroxyl groups of the polymer are free of an acetyl group. Particularly preferred are super-hydrolyzed polyvinyl alcohol-comprising polymers wherein greater than about 99.3 wt-% of the hydroxyl groups of the polyvinyl alcohol polymer are free of acetate groups. The preferred fully hydrolyzed polyvinyl alcohol polymers are available in low, medium or high molecular weight variations characterized by a Brookfield viscosity of a 4 wt-% aqueous solution at 20° C. The low molecular weight polyvinyl alcohol (molecular weight 11,000 to 31,000) has a viscosity of about 4 to 10 cP, the medium molecular weight composition (molecular weight 77,000 to 79,000) has a viscosity of about 15 to 30 cP, and the high molecular weight composition (molecular weight 106,000 to 110,000) has a viscosity of about 35 to 60 cP. The preferred polyvinyl alcohol compositions have a reduced particle size adapting the composition for rapid dissolution upon heating of the bond line. The particle size of the most preferred polyvinyl alcohol is such that 99+% of the product

will pass through a -80 U.S. Standard mesh screen.

Starch

The starch based adhesives of this invention are commonly characterized as being either a carrier adhesive, a no carrier adhesive, or a carrier/no carrier adhesive. The term carrier adhesive implies the presence of a thin base of gelatinized starch in which ungelatinized or nonhydrated starch particles are emulsified or suspended. The term no carrier adhesive implies the substantial absence of gelatinized or hydrated starch in the adhesive emulsion. The term carrier/no carrier adhesive implies that the distinction between gelatinized starch and ungelatinized starch is not clear in the adhesive composition. Generally carrier/no carrier adhesives are prepared in a way that a substantial amount of partly hydrated or partly gelatinized starch is formed. These terms are imprecise since during the preparation of the starch based adhesives some starch inherently becomes gelatinized during processing at any temperature. However substantial proportions of starch remain ungelatinized and nonhydrated during preparation which can gelatinize and interact with PVOH, and borax during green bond formation.

The starch used in both the carrier phase and suspended starch phase is a commodity chemical produced from a number of root, stem or fruit, plant sources. Starch occurs naturally in the form of white granules and comprise linear and branched polysaccharide polymers. Starch is commonly manufactured by first soaking and grinding the plant starch source, and separating the starch from waste matter. The starch is commonly reslurried and processed into a finished dried starch product. Commercial starch often has the form of a pearl starch, powdered starch, high amylose starch, precooked or gelatinized starch, etc. Preferably pearl starch is used in making both the carrier phase and the particulate starch suspended in the carrier.

Base

The novel adhesive compositions of the invention contain a strong base which promotes the production of crosslinking species from the resin and acts to cure the adhesive. Essentially any strong base can be used, although preferred bases are alkali metal hydroxides. The most preferred strong bases are sodium and potassium hydroxide. The strong base also lowers the gel point of the starch, which increases the rate of hydration of the starch during curing of the glue line.

Boric Acid Compound

The novel adhesive compositions of the invention include a boric acid compound which cooperates with the gelatinized and nongelatinized starch during heating and curing by reacting with available hydroxyl groups of the starch, forming a starch borax complex which aids in gelling the carrier starch molecules and the suspended starch molecules. The cooperative reaction increases the tack of the adhesive and produces strong bonds. Any boric acid compound having free hydroxyl groups attached to the boron atom can be used, although commercial boric acid (orthoboric acid, $H_3BO_3$ and its hydrated forms $H_3BO_3-XH_2O$) and borax (sodium tetraborate decahydrate, $Na_2B_4O_7-XH_2O$ and other hydrate and anhydrous forms) are commonly used. For a discussion of boric acid compounds such as boron oxides, boric acids and borates, see Kirk-Othmer Encyclopedia of Chemical Technology, 2nd Edition, Vol. 3, pp. 608-652. The boric acid compound increases the tackiness, viscosity, and cohesive strength of the adhesive. As the adhesive cures in the glue line, a gel structure forms between the hydroxyl group of the polysaccharide, the basic acid compound and the PVOH. The exact mechanism of the crosslinking reaction between these compounds is unknown. Further, the borax buffers the caustic nature of the base used the adhesive stabilizing the adhesive to the hydrolytic effect of the base.

Crosslinking Resins

Resins that can be used in the novel adhesive compositions of this invention include resins that upon heating in basic media generate crosslinking species that react with and crosslink the hydroxyls in adjacent starch molecules. The crosslinking reagent tends to reduce the hydrophilic nature and the water solubility of the starch molecules by effectively removing the availability of hydroxyl groups to water and by introducing aliphatic alkylene-type crosslinking moieties.

A preferred class of crosslinking resins comprise well known condensation products of the reaction of a ketone and an aldehyde compound. These resins are characterized as a polyether polymer but can contain a variety of other monomers such as urea, melamine, etc. In the presence of heat and base, they commonly decompose to produce species that effectively crosslink the starch molecules. Preferred resins are acetone-formaldehyde resins, acetone-urea-formaldehyde resins, acetone-melamine-formaldehyde resins comprising 15 to wt-% acetone, about 5 to 50 wt-% formaldehyde and 0-15 wt-% of third monomer. One example of the preferred crosslinking resin embodiment of this invention comprises the Ketack series of resins manufactured by American Cyanamide.

Wax

The term wax is used very broadly and is applied to a wide variety of materials. The materials can have properties resembling certain well known waxes or can be used to provide physical properties similar to those associated with well known properties of wax such as sealing, polishing, candle making, etc. Many waxy substances have been found in nature and have been known to be useful for many years.

Historically waxes include substances that are natural products. Chemically natural waxes are esters of fatty acids and monohydric fatty alcohols. Physically waxes are water repellant solids having a useful degree of plastic character.

However, modern waxes include various synthetic substances that can replace natural waxes in many preparations. The composition of natural waxes generally comprises an ester of a saturated fatty acid and a long chain monohydric alcohol. Long chain fatty acids often include acids having greater than 16 carbon atoms and most commonly about 26 carbon atoms. The aliphatic monohydric alcohol commonly has at least 14 and can range as high as 36 carbon atoms. Petroleum, mineral or other synthetic waxes often consist of saturated hydrocarbons having aliphatic or open chain structures with relatively low branching or side chains.

Particularly preferable waxes for the water resistant corrugated board adhesive are waxes such as petroleum waxes, candelilla wax, beeswax, etc. Particularly preferred waxes are the petroleum waxes such as microcrystalline waxes, slack waxes and paraffin waxes.

In somewhat greater detail, the novel fast set corrugating adhesives of this invention can be made by combining the ingredients in water and heating the mixture until a smooth uniform composition is formed. Preferably the adhesive is made by combining a starch slurry with a solution of the base in water heating the mixture to at least partially gelatinize the starch and then adding the remaining components under conditions of mixing to form the smooth corrugated adhesive. The adhesive preferably contains from 5 to 75 parts by weight of starch and from 0.1 to 10 parts by weight of base per 100 parts by weight of the adhesive composition. In "carrier" adhesives the carrier phase comprises from 1 to 25 parts by weight of starch and the ungelatinized phase comprises 5 to 50 parts by weight of starch per each 100 parts by weight of adhesive. The net effect is that preferably 100 parts by weight of the aqueous adhesive composition contain from 0.01 to 10 parts by weight of gelatinized starch and from 0.01 to 40 parts by weight of

ungelatinized starch. Particularly when the boric acid compound comprises the aforesaid $H_3BO_3-XH_2O$ or $Na_2B_4O_7-XH_2O$, the adhesive preferably contains from 0.1 to 5 parts by weight of boric acid per each 100 parts of water and optionally from 0.1 to 5 parts by weight of basically reacting crosslinking resin per 100 parts by weight of water and from 0.1 to 5 parts by weight of wax in emulsion form per each 100 parts by weight of water.

Preferably the alkali metal hydroxide is sodium hydroxide which is present at a concentration of from 0.02 to 0.75 parts by weight per each 100 parts by weight of the aqueous adhesive composition, producing a pH that ranges from 9 to 13.

The fast setting adhesive of this invention preferably contains from 0.02 to 2.0 parts by weight of polyvinyl alcohol per each 100 parts of adhesive. More preferably the adhesive contains from 0.1 to 1.5 parts by weight of polyvinyl alcohol and most preferably for reasons of rapid set and compatibility with the adhesive components from 0.25 to 1.25 parts by weight of polyvinyl alcohol per 100 parts by weight of adhesive. The ratio of polyvinyl alcohol to boric acid is important in the invention since the interaction between polyvinyl alcohol and boric acid can cause substantial gelling problems in the manufacture of the adhesive. Preferably, polyvinyl alcohol is used in a ratio of less than 9 parts by weight of polyvinyl alcohol per each part by weight of boric acid, more preferably 1 to 8 parts by weight of polyvinyl alcohol per part of boric acid and most preferably 2 to 7 parts by weight of polyvinyl alcohol per each part by weight of boric acid for reasons of obtaining a fast setting adhesive free of unacceptable component interactions.

The polyvinyl alcohol composition having a soluble phase and an insoluble phase can be formed in the aqueous corrugating board adhesives of this invention in at least two ways. First, an insoluble fully hydrolyzed or super

hydrolyzed polyvinyl alcohol composition can be suspended in the corrugating adhesive to form the insoluble phase and a soluble partially hydrolyzed polyvinyl alcohol composition can be added to the corrugating adhesive to form the soluble phase. Alternatively a cold water insoluble polyvinyl alcohol can be blended with the corrugating adhesive of the invention and either before blending in the adhesive or in the adhesive can be exposed to sufficient heat to hydrate and solubilize the portion of the insoluble polyvinyl alcohol that is susceptible to solubilization at that temperature. We have found that in this way the amount of polyvinyl alcohol solubilized in the adhesives of this invention can be controlled by controlling the temperature to which the polyvinyl alcohol is heated either prior to or after blending

with the starch based corrugating adhesive. The hydrolyzed and super hydrolyzed cold water insoluble polyvinyl alcohol compositions are mixtures of closely related families of polymers which vary depending on generally molecular weight. The lower molecular weight fractions when heated tend to solubilize first, while the last highest molecular weight polyvinyl alcohol composition does not solubilize until heated to a substantial temperature, 49-71°C (120-160°F) or higher.

The following Examples are presented to provide a further understanding of the invention. All percentages are expressed on a weight basis, unless otherwise indicated.

Example I

A solubility study of Elvanol 90-50, 100 U.S. Standard mesh was done.

A 10% dispersion was made by adding Elvanol 90-50 to water with agitation at ambient temperature. A 100g sample was made.

The sample was then placed in a 38.8°C (100°F) water bath and allowed to mix. The sample was covered to minimize loss of water. The solids of the sample was checked by first turning off the mixer and allowing it to sit for 5 minutes and then checked with O'Haus Moisture Balance.

| | Mixing Time | Solids % | Temp. °C | (°F) |
|---|---|---|---|---|
| | 2.5 hours | 1.0 | 38.8 | (100.0) |
| | 1.0 hours | 1.5 | 38.8 | (100.0) |
| Total | 3.5 hours | | | |

The sample was held for 5 days and was then allowed to sit at ambient temperature without agitation. Solids were rechecked at 1.0%. The sample was again reheated and mixed.

| | Mixing Time | Solids % | Temp. °C | (°F) |
|---|---|---|---|---|
| | 1.5 hours | 1.4 | 43.3 | (110.0) |
| | 1.5 hours | 1.5 | 43.3 | (110.0) |
| | 1.5 hours | 1.5 | 46.1 | (115.0) |
| Total | 4.5 hours | | | |

The sample was removed from the water bath and cooled to ambient temperature without agitation. The sample was again

heated and checked for solids.

| | Mixing Time | Solids % | Temp. °C | (°F) |
|---|---|---|---|---|
| | 1.0 hours | 1.5 | 48.9 | (120.0) |
| | 1.0 hours | 2.0 | 54.4 | (130.0) |
| | 1.0 hours | 2.2 | 57.2 | (135.0) |
| | 1.0 hours | 6.5 | 60.0 | (140.0) |
| | 1.0 hours | 11.3 | 64.4 | (148.0) |
| Total | 5.0 hours | | | |

Example II

Into a 5 liter stainless steel beaker equipped with an electrically driven mixer in a 93.3°C (200°F) water bath were added 909.0 grams of deionized water, 78.0 grams of Clinton 121B starch and 18.7 grams of prilled sodium hydroxide. The contents of the beaker were stirred for 15 minutes until uniform. 1472.0 grams of deionized water were added to the suspension in the beaker. The temperature was reduced to about 40.6°C (105°F). Into the suspension was added a solution of 17.0 grams of a partially hydrolyzed, low molecular weight small particle size polyvinyl alcohol polymer (VINOL 203S). The mixture was stirred until the solution was uniform and about 82.8 grams of a fully hydrolyzed, low molecular weight polyvinyl alcohol polymer (ELVANOL 9050) were slowly added to the suspension until fully dispersed. To the uniform dispersion an additional amount (930.0 grams) of Clinton 121B starch was added over a 5 minute period with stirring. At the end of the addition 6.8 grams of 5-mol borax were added to the suspension and mixed over a 5 minute period. Finally, a pre-mix solution of 37.9 grams of an acetone-formaldehyde resin and 32.2 grams of water was slowly added over a 10 minute period to the uniform dispersion. At the end of addition the mixing was continued for 15 minutes. At the end of the mixing period the viscosity of the solution was 11.63 #5 Zahn cup seconds.

Claims:

1. An aqueous, fast setting corrugating adhesive composition, which provides for the rapid formation of a strong green bond and a strong finally cured bond which comprises, in an aqueous emulsion a major proportion of water, from 5 to 100 parts by weight of starch per each 100 parts by weight of the adhesive, sufficient alkali metal hydroxide to provide an alkaline pH, from 0.1 to 5 parts by weight of a boric acid compound per each 100 parts by weight of water, and from 0.01 to 10 parts by weight of a polyvinyl alcohol composition comprising a soluble fraction and an insoluble fraction, wherein there are from 1 to 100 parts by weight of the insoluble fraction per each part of soluble fraction.

2. The composition of claim 1 wherein there are from 2.5 to 90 parts by weight of the insoluble fraction per each part by weight of the soluble fraction.

3. The composition of claim 2 wherein there are from 5 to 75 parts by weight of the insoluble fraction per each part by weight of the soluble fraction.

4. The composition of any preceding claim, wherein the polyvinyl alcohol composition is present at a concentration of from 0.02 to 2 parts by weight per each 100 parts by weight of the adhesive composition.

5. The composition of any preceding claim, wherein the weight ratio of the polyvinyl alcohol composition to the boric acid composition is less than 9:1.

6. The composition of any preceding claim, wherein the soluble fraction comprises a low molecular weight partially hydrolyzed polyvinyl alcohol.

7. The composition of any preceding claim, wherein the insoluble fraction comprises a fully hydrolyzed polyvinyl alcohol.

8. The composition of claims 6 and 7, wherein the partially hydrolyzed polyvinyl alcohol composition has a degree of hydrolysis of not more than 91% and the hydrolyzed polyvinyl alcohol composition has a degree of

hydrolysis of at least 94%,

9. The composition of any preceding claim, wherein the particle size of the insoluble fraction is less than 80 U.S. Standard mesh.

10. The composition of any preceding claim, wherein the starch is present in the form of ungelatinized starch particles suspended in a carrier phase of a gelatinized starch in an aqueous emulsion wherein there are from 0.01 to 10 parts by weight of gelatinized starch and from 0.01 to 40 parts by weight of ungelatinized starch per each 100 parts by weight of the aqueous adhesive composition.

11. The composition of any preceding claim, wherein the alkali metal hydroxide is sodium hydroxide which is present at a concentration of from 0.02 to 0.75 parts by weight per each 100 parts by weight of the aqueous adhesive composition, producing a pH that ranges between about 9 and 13.

12. The composition of any preceding claim, wherein the boric acid compound comprises $H_3BO_3$-$XH_2O$ or $Na_2B_4O_7$-$XH_2O$, wherein X is a number from 0 to 10 and is present in the aqueous adhesive composition at a concentration of from 0.1 to 5 parts of boric acid per each 100 parts by weight of water.